# EUROPEAN PATENT APPLICATION

(11) **EP 4 647 240 A1**
(43) Date of publication of application: **12.11.2025**
(21) Application number: 24191971.1
(22) Date of filing: 31.07.2024
(51) Int. Cl.: B29C 63/00, A47B 23/04, B29C 63/02, G06F 1/16

(54) **SCREEN PROTECTOR APPLICATOR WITH BRACKET**

(30) Priority: 07.05.2024 CN 202420973448 U
(71) Applicant: Dongguan Pinjia Technology Co., Ltd., Dongguan (CN)
(72) Inventor: Liu, Xiaofen, Dongguan (CN)
(74) Representative: Metida

(57) **Abstract**

A screen protector applicator with a bracket includes a screen protector positioning box, wherein a positioning frame is arranged on one side of the screen protector positioning box, and the positioning frame and the screen protector positioning box are integrated, a positioning strip is arranged on the side of the screen protector positioning box, a support plate is movably arranged on the other side of the screen protector positioning box, a bracket is movably arranged on the positioning frame, and a mounting groove is further arranged on a side of the bracket close to the screen protector positioning box. The function of the screen protector positioning box is expanded, by movably arranging a bracket on the screen protector positioning box, so that the screen protector positioning box has the functions of assisting screen protector application and supporting the electronic device.

## Description

### FIELD

The present disclosure relates to a technical field of accessories of electronic device, in particular to a screen protector applicator with a bracket.

### BACKGROUND

Mobile phones have become an indispensable electronic product in people's fives, for touch-screen mobile phones, the touch screen is easily scratched, which affects display effect and aesthetics of the touch screen, users usually stick a layer of screen protector on the touch screen. Therefore, various screen protector sticking boxes for auxiliary sticking have appeared on the market, such tool can help people stick the screen protector quickly and accurately.

The screen protector sticking box in prior art is a product with a single function, due to the high pertinence, the screen protector sticking box can only be applied to one type of electronic device, after the screen protector sticking, the screen protector sticking box has no other uses, which easily leads to a waste of resources.

For example, a Chinese patent with an application number of 202222928846.4 discloses a screen protector applicator with a support function, the screen protector applicator includes: a bracket and a bracket rod, a mobile phone bracket base is provided at a bottom end of a front side of the bracket, a mobile phone positioning frame is protrudingly provided on a back side of the bracket, the bracket rod is rotatably connected with the bracket, and a positioning column is protrudingly provided on the back side of the bracket, based on the above structure, the screen protector applicator can be used as a mobile phone bracket, thereby having two uses to avoid waste.

Although the above screen protector applicator achieves a purpose of expanding the function of the screen protector applicator with a support function, since the mobile phone bracket base is integrated on the bracket, and is arranged on the front side of the bracket, the bracket cannot maintain flat when the screen protector is sticked to the mobile phone, which may easily affect quality of the screen protector application.

Therefore, how to expand the functions of the screen protector applicator without affecting its original functions has become a problem worth considering.

### SUMMARY

In order to solve the above-mentioned technical problems, the present disclosure provides a screen protector applicator with a bracket.

The technical solution of the present disclosure is achieved in this way:

A screen protector applicator with a bracket, includes: a screen protector positioning box, a positioning frame is arranged on one side of the screen protector positioning box, and the positioning frame and the screen protector positioning box are integrated, a positioning strip is arranged on the side of the screen protector positioning box, a support plate is movably arranged on the other side of the screen protector positioning box, a bracket is movably arranged on the positioning frame, and a mounting groove is further arranged on a side of the bracket close to the screen protector positioning box.

Further, the bracket is U-shaped, the bracket is bolted to the positioning frame, a handle is provided at an end of the bracket, the handle and the bracket are integrated, and an opening is provided at a position of the handle close to the screen protector positioning box.

Further, a positioning buckle groove is provided on an outer wall of each of two sides of the bracket, and a positioning buckle is provided on the side of the screen protector positioning box, an end of the positioning buckle is buckled into the positioning buckle groove.

Further, the positioning strip arranged on the screen protector applicator positioning box, the positioning strip and the screen protector positioning box are integrated, and the positioning strip is grooved joint in the mounting groove.

Further, a plurality of first top blocks are further provided on the side of the screen protector applicator positioning box, and a limit block is provided at a position of the screen protector positioning box 1 close to the handle.

Further, the positioning frame and an inner wall of the bracket are both provided with a second top block, the second top block on the positioning frame and the positioning frame are integrated, the second top block on the bracket and the bracket are integrated, a screen protector pulling groove is provided at an end of the positioning frame away from the bracket.

Further, the support plate is embedded in the screen protector positioning box, and an end of the support plate is hinged on the screen protector positioning box, a maximum movable angle of the support plate is 90°.

Further, an end of the bracket connected with the positioning frame is designed with a chamfered angle and is smoothed.

Compared with the prior art, the present disclosure has the following beneficial effects:
1. The present disclosure expands the function of the screen protector positioning box, which originally only has the function of assisting screen protector application, by movably arranging a bracket on the screen protector positioning box, so that the screen protector positioning box has the functions of assisting screen protector application and supporting the electronic device, at the same time, by arranging a support plate on the other side of the screen protector positioning box, the electronic device can be placed on the support plate, thereby enriching the function of the screen protector applicator and avoiding the waste of resources;
2. The support plate in the present disclosure can be rotated and received in the screen protector positioning box, which will not affect the flatness of the screen protector positioning box, and avoid affecting the quality of the screen protector application, due to the screen protector positioning box body not being able to be placed flat, during the screen protector application process, which solves the problem that the screen protector applicator with a mobile phone supporting function in the prior art cannot maintain the bracket flat when applying the screen protector on the mobile phone, the quality of screen protector application is easily affected.

### BRIEF DESCRIPTION OF THE DRAWINGS

FIG. 1 is a structural schematic view of a screen protector applicator with a bracket according to the present disclosure;
FIG. 2 is another structural schematic view of the screen protector applicator with the bracket according to the present disclosure;
FIG. 3 is a structural schematic view of the screen protector applicator with the bracket when in use according to the present disclosure;
FIG. 4 is another structural schematic view of the screen protector applicator with the bracket when in use according to the present disclosure.

### DETAILED DESCRIPTION

In order to make a purpose, features, and advantages of the present disclosure more obvious and understandable, technical solutions in the embodiment of the present disclosure will be clearly and completely described below in conjunction with the drawings in the embodiment of the present disclosure, obviously, the embodiments described below are only parts of the embodiment of the present disclosure, not all of the embodiments. According to the embodiment of the present disclosure, all other embodiments obtained by those of ordinary skill in the art without creative work are within the scope of protection of the present disclosure.

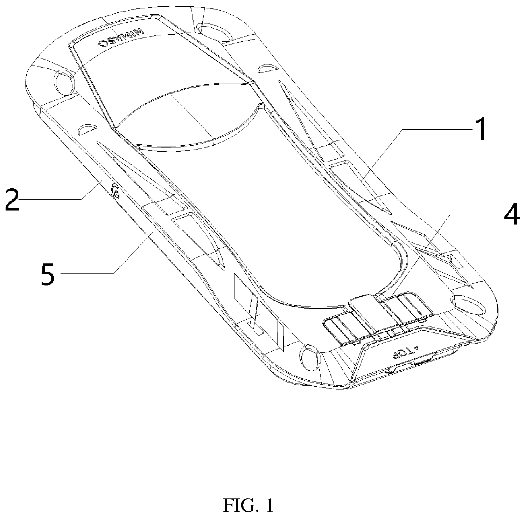

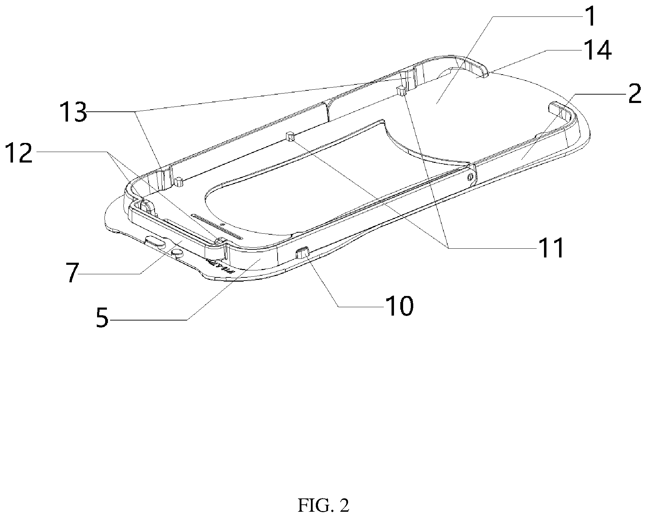

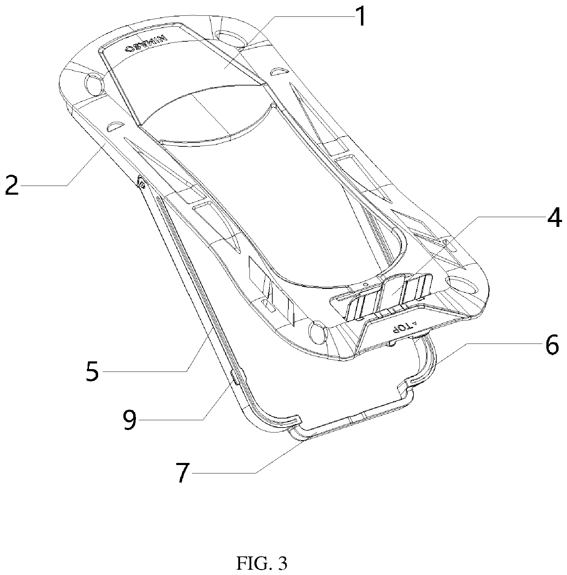

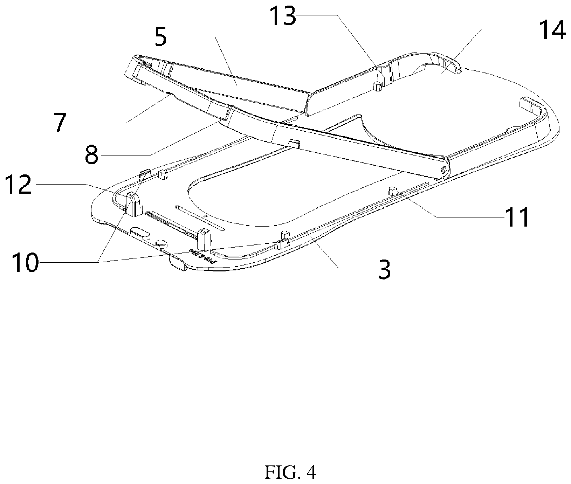

Referring to FIGS. 1 to 4, a screen protector applicator with a bracket includes a screen protector positioning box 1, one side of the screen protector positioning box 1 is provided with a positioning frame 2, the positioning frame 2 and the screen protector positioning box 1 are integrated, one side of the screen protector positioning box 1 is provided with a positioning strip 3, and the other side of the screen protector positioning box 1 is provided with a support plate 4, the support plate 4 is movable, the positioning frame 2 is provided with a bracket 5, the bracket 5 is movable, a side of the bracket 5 close to the screen protector positioning box 1 is provided with a mounting groove 6; in one embodiment, by unfolding the bracket 5 movably arranged on the positioning frame 2, the bracket 5 can be made to form a certain angle with the screen protector positioning box 1, and can be used as a supporting bracket for an electronic device; the screen protector positioning box 1 is provided with a positioning strip 3, the positioning strip 3 corresponds to the mounting groove 6 arranged on the movable bracket 5, so as to fix the bracket 5 in a folding state, which helps to accurately store the bracket back into the screen protector positioning box 1.

Further, the bracket 5 is U-shaped, the bracket 5 is bolted to the positioning frame 2, and a handle 7 is provided at one end of the bracket 5, the handle and the bracket 5 is integrated, an opening 8 is provided at a position of the handle 7 close to the screen protector positioning box 1; the bracket 5 can be unfolded by pulling up the handle 7.

Further, a positioning buckle groove 9 is provided on an outer wall of each of two sides of the bracket 5, and a positioning buckle 10 is further provided on one side of the screen protector positioning box 1, one end of the positioning buckle 10 is buckled into the positioning buckle groove 9; the positioning buckle 10 can be used to further fix the bracket 5 in the folding state to, thereby prevent the bracket 5 from easily rotating during a screen protector application process, and causing a position of the electronic device to shift, and causing the screen protector to be improperly applied.

Further, the positioning strip 3 is arranged on the screen protector positioning box 1, the positioning strip 3 and the screen protector positioning box 1 are integrated, and the positioning strip 3 is grooved joint in the mounting groove 6; by utilizing the groove joint cooperation between the positioning strip 3 and the mounting groove 6, the bracket 5 can be accurately received in the screen protector positioning box 1.

Further, a number of first top blocks 11 are provided on one side of the screen protector positioning box 1, and a limit block 12 is provided at a position of the screen protector positioning box 1 close to the handle 7; the first top block 11 is used to support the electronic device during the screen protector application process, and the limit block 12 is used to fix the handle 7 on the bracket 5, and provide a certain anti-deformation ability for the bracket 5, thereby prevent the bracket 5 from being deformed due to force, and affecting the screen protector application.

Further, the positioning frame 2 and an inner wall of the bracket 5 are both provided with a second top block 13, the second top block 13 on the positioning frame 2 and the positioning frame 2 are integrated, the second top block 13 on the bracket 5 and the bracket 5 are integrated, a screen protector pulling groove 14 is provided at an end of the positioning frame 2 away from the bracket 5; the second top block 13 contacts an edge of the electronic device, so that the sides of the electronic device can be fixed, and the electronic device can be further stabilized; the screen protector pulling groove 14 facilitates pulling out the release screen protector when applying screen protector to the electronic device.

Further, the support plate 4 is embedded in the screen protector positioning box 1, and an end of the support plate 4 is hinged on the screen protector positioning box 1, a maximum movable angle of the support plate 4 is 90°; the support plate 4 is flipped on the screen protector positioning box 1, the support plate 4 can be received in the screen protector positioning box 1, and the support plate 4 can be flipped out when in use to support the electronic device.

Further, an end of the bracket 5 connected with the positioning frame 2 is designed with a chamfered angle and is smoothed; the chamfered angle can limit a movable angle range of the bracket 5, and the smoothed end of the bracket 5 can prevent the bracket 5 and the positioning frame 2 from rubbing against each other and causing wear.

A operating process and principle of the present disclosure are as follows:
According to the present disclosure, by pulling the handle 7, the bracket 5 movably arranged on the screen protector positioning box 1 is rotated, so that the bracket 5 forms a certain angle with the screen protector positioning box 1, thereby forming a stable bracket, since the end of the bracket 5 connected with the positioning frame 2 is designed with a chamfered angle, the movable angle range of the bracket 5 can be limited, thereby expanding the function of the screen protector positioning box 1, so that the screen protector positioning box 1 has the functions of screen protector application assisting and supporting the electronic device, at the same time, the support plate 4 embedded in the screen protector positioning box 1 is flipped, so that the support plate 4 forms a 90° angle with the screen protector positioning box 1 for supporting the electronic device, the support plate 4 is used as a supporting component for the electronic device, and the support plate 4 can be received in the screen protector positioning box 1 without affecting the surface flatness, which helps to prevent the quality of the screen protector application from being affected, due to the screen protector positioning box 1 not being able to be placed flat, during the screen protector application process.

The above detailed description of the specific implementation of the present disclosure is only used as an example, the present disclosure is not limited to the specific implementation described above, the persons skilled in the art should understand that, the above embodiments and descriptions are only for explaining the principle of the present disclosure, without departing from the spirit and scope of the present disclosure, the present disclosure can have various changes and improvements, which fall within the protection scope of the present disclosure. The protection scope of the present disclosure is defined by the attached claims and their equivalents.

## Claims

1. A screen protector applicator with a bracket, comprising: a screen protector positioning box, wherein a positioning frame is arranged on one side of the screen protector positioning box, and the positioning frame and the screen protector positioning box are integrated, a positioning strip is arranged on the side of the screen protector positioning box, a support plate is movably arranged on the other side of the screen protector positioning box, a bracket is movably arranged on the positioning frame, and a mounting groove is further arranged on a side of the bracket close to the screen protector positioning box.

2. The screen protector applicator with the bracket according to claim 1, wherein: the bracket is U-shaped, the bracket is bolted to the positioning frame, a handle is provided at an end of the bracket, the handle and the bracket are integrated, and an opening is provided at a position of the handle close to the screen protector positioning box.

3. The screen protector applicator with the bracket according to claim 1, wherein: a positioning buckle groove is provided on an outer wall of each of two sides of the bracket, and a positioning buckle is provided on the side of the screen protector positioning box, an end of the positioning buckle is buckled into the positioning buckle groove.

4. The screen protector applicator with the bracket according to claim 2, wherein: a positioning buckle groove is provided on an outer wall of each of two sides of the bracket, and a positioning buckle is provided on the side of the screen protector positioning box, an end of the positioning buckle is buckled into the positioning buckle groove.

5. The screen protector applicator with the bracket according to claim 1, wherein: the positioning strip arranged on the screen protector applicator positioning box, the positioning strip and the screen protector positioning box are integrated, and the positioning strip is grooved joint in the mounting groove.

6. The screen protector applicator with the bracket according to claim 1, wherein: a plurality of first top blocks are further provided on the side of the screen protector applicator positioning box, and a limit block is provided at a position of the screen protector positioning box 1 close to the handle.

7. The screen protector applicator with the bracket according to claim 2, wherein: a plurality of first top blocks are further provided on the side of the screen protector applicator positioning box, and a limit block is provided at a position of the screen protector positioning box 1 close to the handle.

8. The screen protector applicator with the bracket according to claim 1, wherein: the positioning frame and an inner wall of the bracket are both provided with a second top block, the second top block on the positioning frame and the positioning frame are integrated, the second top block on the bracket and the bracket are integrated, a screen protector pulling groove is provided at an end of the positioning frame away from the bracket.

9. The screen protector applicator with the bracket according to claim 1, wherein: the support plate is embedded in the screen protector positioning box, and an end of the support plate is hinged on the screen protector positioning box, a maximum movable angle of the support plate is 90°.

10. The screen protector applicator with the bracket according to claim 1, wherein: an end of the bracket connected with the positioning frame is designed with a chamfered angle and is smoothed.
